# EUROPEAN PATENT SPECIFICATION

(11) **EP 3 683 509 B1**
(45) Date of publication and mention of the grant of the patent: **08.04.2026**
(21) Application number: 18857002.2
(22) Date of filing: 30.08.2018
(51) Int. Cl.: F24F 13/14, F24F 1/0011, F24F 13/15, F24F 1/0057

(54) **AIR GUIDE MECHANISM AND AIR CONDITIONER PROVIDED WITH SAME**
LUFTFÜHRUNGSMECHANISMUS UND KLIMAANLAGE DAMIT
MÉCANISME DE GUIDAGE D'AIR ET CLIMATISEUR POURVU DE CELUI-CI

(30) Priority: 12.09.2017 CN 201710837691
(43) Date of publication of application: 22.07.2020
(73) Proprietor: Gree Electric Appliances (Wuhan) Co., Ltd., Hubei 430056 (CN); Gree Electric Appliances, Inc. of Zhuhai, Zhuhai, Guangdong 519070 (CN)
(72) Inventor: LIN, Qinghui, Zhuhai Guangdong 519070 (CN); WANG, Chunjie, Zhuhai Guangdong 519070 (CN); DENG, Haoguang, Zhuhai Guangdong 519070 (CN)
(74) Representative: V.O.
(86) International application number: PCT/CN2018/103183
(87) International publication number: WO 2019/052341

(56) References cited:
- CN-A- 101 995 078
- CN-A- 103 528 175
- CN-A- 103 528 175
- CN-A- 104 101 070
- CN-A- 106 481 679
- CN-A- 107 525 149
- CN-U- 201 628 345
- CN-U- 202 792 437
- CN-U- 203 024 368
- CN-U- 203 375 641
- CN-Y- 201 293 432
- JP-A- 2001 208 415
- JP-A- 2008 145 084

## Description

### Technical Field

The present invention relates to a field of air conditioning apparatuses, and in particular to an air guiding mechanism and an air conditioner with an air guiding mechanism.

### Background

In order to implement left, right and upper and lower blowing, a conventional air guiding mechanism of a split air conditioner needs to be provided with a left and right air guiding mechanism and an upper and lower air guiding mechanism, and the two air guiding mechanisms are separately provided, and an air sweeping blade for left and right air sweeping is mounted on a bottom case and a driving mechanism for driving the air sweeping blade is also provided on the bottom case. A baffle for upper and lower air guiding is pushed out of the whole unit by its driving mechanisms, and the driving mechanisms thereof are driving structures capable of extending out of the whole unit; two driving mechanisms for pushing the baffle to an outside of the whole unit are arranged on both sides of the air conditioner, a connecting device is arranged on a driving mechanism on one side thereof to connect the baffle, and a motor is arranged on the connecting device to drive the baffle to move up and down, and one hook is arranged on the other side of the air conditioner to support the other end of the baffle. The air guiding mechanisms has a complex structure, a high cost, and a complex control process.

In order to solve the above problem, in an existing improved air guiding mechanism, the left and right sweeping blade is rotatably mounted on the baffle, a motor for driving left and right air sweeping blade is mounted on a telescopic rod of a driving box on one side of the air conditioner, and the motor is drivablely connected with one end of the left and right air sweeping blade by an output shaft, the other end of the left and right air sweeping blade is rotatably connected to the baffle; a motor for driving the baffle is mounted on a telescopic rod of a driving box on the other side of the air conditioner and is drivablely connected to one end of the baffle, and the other end of the baffle is hooked on an output shaft driving the left and right air sweeping blade by a hook structure, such a design makes the left and right air sweeping and the upper and lower air sweeping independent, and a interference is formed between a rotation of the left and right air sweeping blade and a rotation of the baffle.

The document D1 provides an air guide device which includes an air guide plate, an air guide blade assembly, a first driving mechanism and a second driving mechanism, wherein the air guide blade assembly is installed on the air guide plate; The vane assembly comprises a vane fixing rod, a vane connecting rod and a plurality of vanes, each vane includes a flaky body and a first mounting part and a second mounting part arranged at the bottom of the body, and the vanes are detachably connected with the vane fixing rod and the vane connecting rod respectively through the first mounting part and the second mounting part. The air guide device of the invention has the advantages of small occupied space and convenient disassembly and cleaning. The invention also provides an air conditioner adopting the wind guiding device.

### Summary

Some embodiments of the present disclosure provide an air guiding mechanism and an air conditioner with the air guiding mechanism, so as to at least solve the problem in the related art that an interference is formed due to the left and right air sweeping blade and the baffle rotate.

An embodiment of the present invention provides an air guiding mechanism, including an baffle, an air sweeping blade and an air sweeping blade driving motor, the air sweeping blade is rotatably disposed on the baffle, a driving shaft of the air sweeping blade driving motor is drivablely connected with a rotating shaft of the air sweeping blade, so as to drive the air sweeping blade to rotate, wherein the air guiding mechanism further includes a shaft sleeve, and the driving shaft and/or the rotating shaft are rotatably provided in the shaft sleeve in a penetration manner; and the baffle is rotatably connected with the shaft sleeve, so that the baffle and the air sweeping blade are rotated relatively without interference by the shaft sleeve.

According to the invention, the air sweeping blade driving motor is provided with an end cover, and the shaft sleeve is fixedly connected to or integrally formed with the end cover, so that the driving shaft is rotatably provided in the shaft sleeve in a penetration manner.

According to the invention, the air sweeping blade driving motor is mounted on the driving box telescopic rod.

In an exemplary embodiment, a positioning rod is connected to the end cover, and the positioning rod is connected with the telescopic rod of a driving box to support the end cover on the telescopic rod of a driving box.

In an exemplary embodiment, the positioning rod extends along an extending direction of the telescopic rod of a driving box.

In an exemplary embodiment, the baffle is provided with a hook, and the baffle is rotatably mounted on the shaft sleeve by the hook in a hanging manner.

In an exemplary embodiment, an outer wall of the shaft sleeve is provided with a limiting groove around a circumferential direction of the shaft sleeve, and the hook is rotatably provided in the limiting groove in a hanging manner.

In an exemplary embodiment, the air sweeping blade driving motor is provided with an end cover; wherein the shaft sleeve includes: a cylindrical body portion and a flange portion, one end of the cylindrical body portion being connected to an end face of the end cover, and the flange portion being provided at the other end of the cylindrical body portion, the limiting groove being formed among the end face of the end cover, an outer circumferential wall of the cylindrical body portion and the flange portion.

In an exemplary embodiment, the end face of the end cover is provided with an annular flange, and the limiting groove is surrounded by the annular flange, the outer circumferential wall of the cylindrical body portion and the flange portion.

In an exemplary embodiment, the shaft sleeve is provided on the driving shaft in a sleeving manner, and an inner diameter of the shaft sleeve is larger than an outer diameter of the driving shaft, so that the driving shaft is in clearance fit with the shaft sleeve.

In an exemplary embodiment, the air guiding mechanism further includes: an baffle driving motor; wherein one end of the baffle is rotatably connected with the shaft sleeve, and the other end of the baffle is connected with the baffle driving motor, so that the baffle driving motor drives the baffle to rotate.

Another embodiment of the present disclosure provides an air conditioner, including an air guiding mechanism, wherein the air guiding mechanism is the above air guiding mechanism.

The air guiding mechanism of the present disclosure includes an baffle, an air sweeping blade and an air sweeping blade driving motor, the air sweeping blade is rotatably arranged on the baffle, and a driving shaft of the air sweeping blade driving motor is connected with a rotating shaft of the air sweeping blade in a transmission manner, so as to drive the air sweeping blade to rotate, and the air guiding mechanism further includes a shaft sleeve, the driving shaft and/or the rotating shaft are rotatably provided in the shaft sleeve in a penetration manner, and the baffle is rotatably connected with the shaft sleeve, so that the baffle and the air sweeping blade rotate relatively without interference by the shaft sleeve. Thus, the left and right air sweeping and the upper and lower air sweeping are independent, thereby solving the problem in the related art that an interference is formed due to the left and right air sweeping blade and the baffle rotate.

In addition to the objects, features and advantages described above, the present disclosure also has other objects, features and advantages. Hereinafter, the present disclosure will be further described in detail with reference to the drawings.

### Brief Description of the Drawings

A part of drawings of the disclosure are provided to further understand the disclosure, and schematic embodiments and description are adopted not to limit the disclosure but only to explain the disclosure. In the drawings:
Fig. 1 illustrates a structural schematic diagram of an optional air guiding mechanism according to an embodiment of the present disclosure;
Fig. 2 illustrates a partial schematic diagram of an optional air guiding mechanism according to an embodiment of the present disclosure;
Fig. 3 illustrates an enlarged structural schematic diagram of A in Fig. 2;
Fig. 4 illustrates a schematic diagram of a split structure of a shaft sleeve of an optional air guiding mechanism and a air sweeping blade driving motor according to an embodiment of the present disclosure;
Fig. 5 illustrates a schematic diagram of an assembly structure of a shaft sleeve of an optional air guiding mechanism and a air sweeping blade driving motor according to an embodiment of the present disclosure;
Fig. 6 illustrates a schematic diagram of an assembly structure of a shaft sleeve of an optional air guiding mechanism and an end cover of a air sweeping blade driving motor according to an embodiment of the present disclosure;
Fig. 7 illustrates another partial schematic diagram of an optional air guiding mechanism according to an embodiment of the present disclosure.

Wherein, the drawings include the following drawing markers:
10, baffle; 11, hook; 20, air sweeping blade; 21, rotating shaft; 30, air sweeping blade driving motor; 31, driving shaft; 32, end cover; 40, shaft sleeve; 41, limiting groove; 42, cylindrical body portion; 43, flange portion; 50, positioning rod; 60, telescopic rod of a driving box; 70, baffle driving motor.

### Detailed Description of the Embodiments

It needs be noted that embodiments and the characteristics of the embodiments of the present disclosure are combined with each other without confliction. Hereinafter, the present disclosure will be described in detail with reference to the accompanying drawings and embodiments.

In order to make those skilled in the art better understand the technical solutions of the present disclosure, the technical solutions in the embodiments of the present disclosure will be clearly and completely described below with reference to the accompanying drawings in the embodiments of the present disclosure. Apparently, the described embodiments are merely a part of the embodiments of the present disclosure, rather than all of the embodiments. Based on the embodiments of the present disclosure, all other embodiments obtained by those skilled in the art without creative efforts shall fall within the scope of protection of the present disclosure.

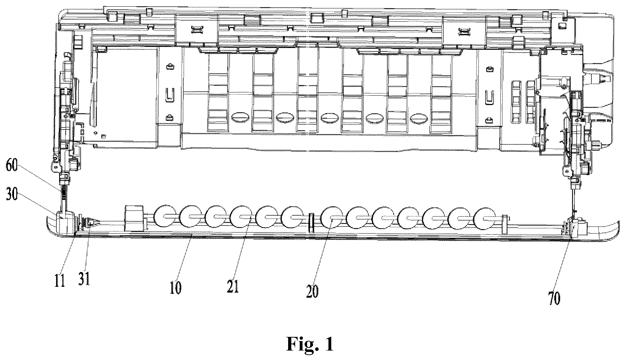

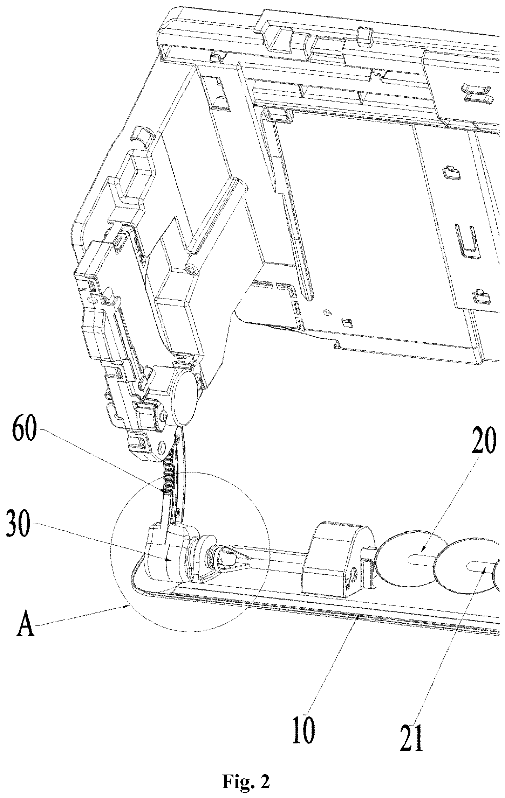

According to the air guiding mechanism of the embodiment of the present disclosure, as shown in Figs. 1 to Figs. 3, including an baffle 10, an air scanning blade 20 and an air scanning blade driving motor 30, and the air scanning blade 20 is rotatably disposed on the baffle 10. A driving shaft 31 of the air sweeping blade driving motor 30 is drivablely connected with a rotating shaft 21 of the air sweeping blade 20 to drive the air sweeping blade 20 to rotate, the air guiding mechanism further includes a shaft sleeve 40, the driving shaft 31 and/or the rotating shaft 21 are rotatably disposed in the shaft sleeve 40 in a penetration manner, and the baffle 10 is rotatably connected with the shaft sleeve 40, so that the baffle 10 and the air sweeping blade 20 are rotated relatively without interference by the shaft sleeve 40.

In an embodiment of the present disclosure, the air guiding mechanism includes an baffle 10, a air sweeping blade 20 and an air sweeping blade driving motor 30, where the air sweeping blade 20 is rotatably disposed on the baffle 10, and a driving shaft 31 of the air sweeping blade driving motor 30 is drivablely connected with a rotating shaft 21 of the air sweeping blade 20 to drive the air sweeping blade 20 to rotate, the air guiding mechanism further includes a shaft sleeve 40, the driving shaft 31 and/or the rotating shaft 21 are rotatably disposed in the shaft sleeve 40 in a penetration manner, and the baffle 10 is rotatably connected with the shaft sleeve 40, so that the baffle 10 and the air sweeping blade 20 are rotated relatively without interference by the shaft sleeve 40. Thus, the left and right air sweeping and the upper and lower air sweeping are independent , thereby solving the problem in the related art that an interference is formed due to the left and right air sweeping blade and the baffle rotate.

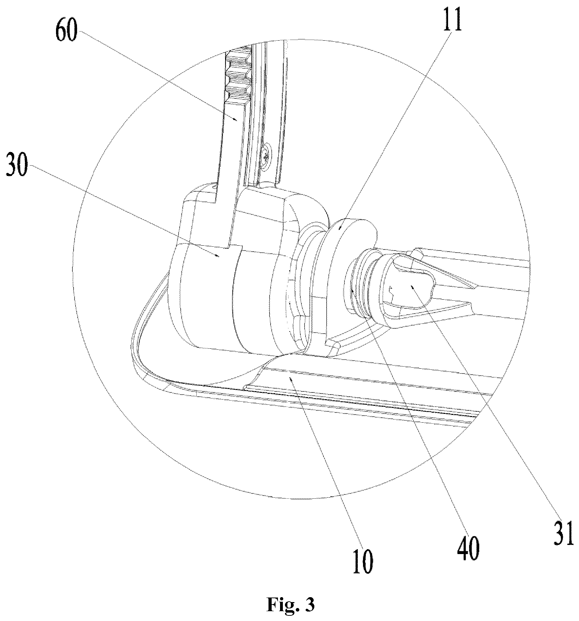

In a specific implementation, for the simplicity of the structure, as shown in Fig. 3, the shaft sleeve 40 is sleeved on the driving shaft 31 of the air sweeping blade driving motor 30, and the shaft sleeve 40 is fixed on the air sweeping blade driving motor 30, so that when the driving shaft 31 drives the air sweeping blade 20 to rotate by the rotating shaft 21, the shaft sleeve 40 is kept stationary with respect to the driving shaft 31, so that the baffle 10 connected to the shaft sleeve 40 is kept in an original state; Likewise, when the baffle 10 is rotated, the shaft sleeve 40 also remains stationary with respect to the baffle10, so as to avoid driving the sweeping blade 20 to rotate due to a friction, so as to realize that the left and right air sweeping and the upper and lower air sweeping are independent, thereby solving the problem in related art that an interference is formed due to the left and right air sweeping blade and the baffle rotate.

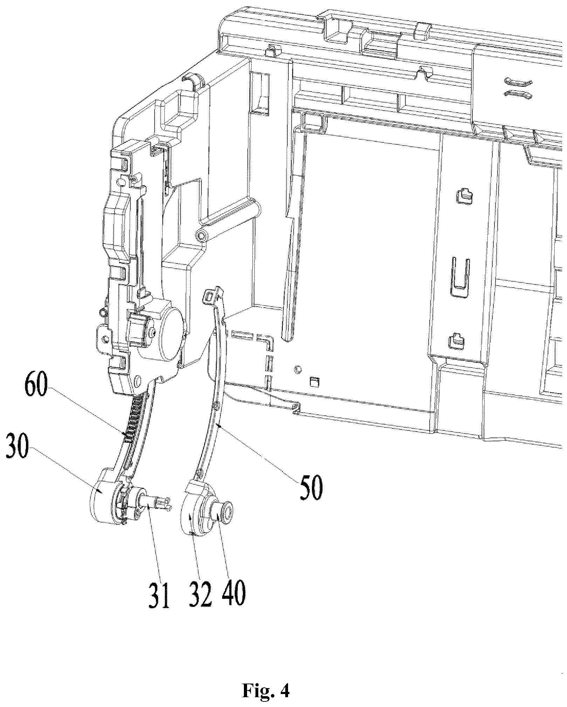

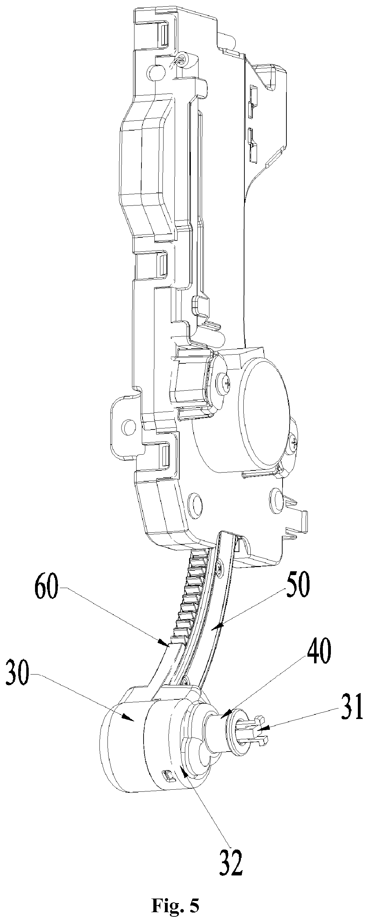

In an exemplary embodiment, as shown in Figs. 4 and 5, the air sweeping blade driving motor 30 is installed at the end of the telescopic rod of a driving box 60, and the telescopic rod of a driving box 60 is used for driving the baffle 10 to extend out of the air outlet of the air conditioner or to return to the air outlet of the air conditioner. The air sweeping blade driving motor 30 includes an end cover 32, one end of the shaft sleeve 40 is fixedly connected to or integrally formed with the end cover 32, and the driving shaft 31 is rotatably provided in the end cover 32 and the shaft sleeve 40 in a penetration manner, and the driving shaft 31 is connected with the rotating shaft 21 of the air sweeping blade 20; the inner diameter of the shaft sleeve 40 is greater than the outer diameter of the driving shaft 31, so that the driving shaft 31 is in clearance fit with the shaft sleeve 40 ; A positioning rod 50 is connected to the end cover 32, and the shape of the positioning rod 50 matches the shape of the driving box telescopic rod 60 and extends along the extending direction of the telescopic rod 60 of a driving box. The positioning rod 50 is connected to the telescopic rod of a driving box 60 by a screw, so as to support the end cover 32 and the shaft sleeve 40 on the telescopic rod of a driving box 60, so that the shaft sleeve 40 remains stationary with respect to the driving shaft 31 when the driving shaft 31 is rotated.

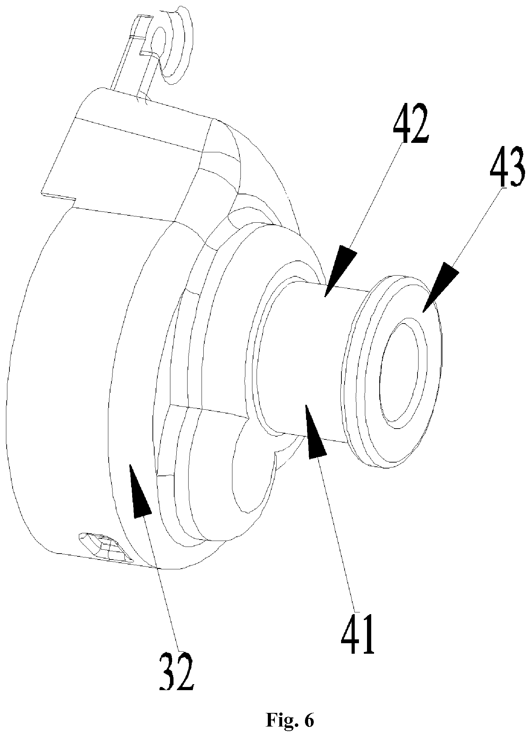

In order to facilitate the disassembly of the baffle 10 and satisfy the normal rotation of the baffle 10, as shown in Fig. 3, the baffle 10 is provided with a hook 11, and the baffle 10 is rotatably mounted on the shaft sleeve 40 by the hook 11. As shown in Fig. 6, the shaft sleeve 40 includes: a cylindrical body portion 42 and a flange portion portion 43; one end of the cylindrical body portion 42 is connected to an end face of the end cover 32; the flange portion 43 is provided at the other end of the cylindrical body portion 42, so that a limiting groove 41 is formed between the end face of the end cover 32, an outer circumferential wall of the cylindrical body portion 42 and the flange portion 43; the limiting groove 41 is provided around the circumferential direction of the shaft sleeve 40; and the hook 11 is rotatably hooked in the limiting groove 41. In order to accommodate the internal structure of the air sweeping blade driving motor 30, the end face of the end cover 32 has an annular flange, so that the annular flange, the outer circumferential wall of the cylindrical body portion 42, and the flange portion 43 surround the limiting groove 41.

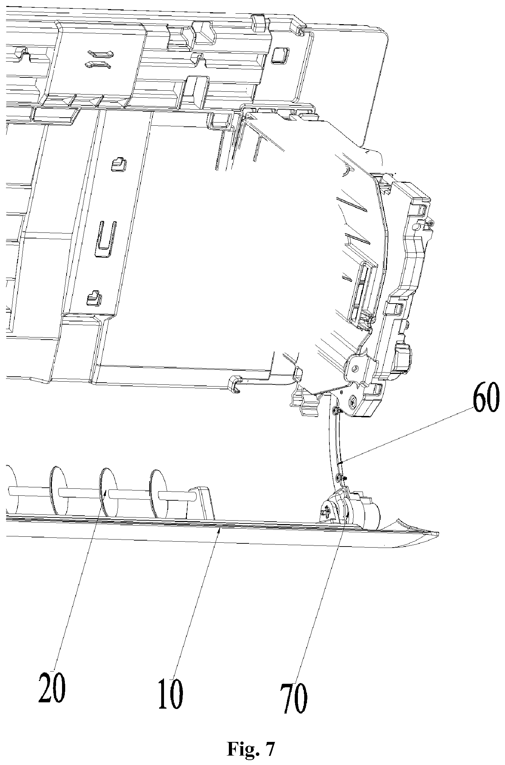

In order to drive the baffle 10 to rotate, as shown in Fig. 7, the air guiding mechanism further includes: a baffle driving motor 70, in which the baffle driving motor 70 is provided at an end portion of telescopic rod of a driving box 60 at the other end of the housing of the indoor unit of the air conditioner, and an output shaft of the baffle driving motor 70 is in transmission connection with a connection lug on the baffle 10, so as to drive the baffle 10 to rotate.

According to a second embodiment of the present disclosure, provided is an air conditioner, including an air guiding mechanism, wherein the air guiding mechanism is the air guiding mechanism of the above embodiment. By applying the air guiding mechanism of the air conditioner of the above embodiment, the left and right air sweeping and the upper and lower air sweeping can be independent, thereby solving the problem in the related art that an interference is formed due to the left and right air sweeping blade and the baffle rotate.

## Claims

1. An air guiding mechanism, comprising a baffle (10), an air sweeping blade (20) and an air sweeping blade driving motor (30), wherein the air sweeping blade (20) is rotatably disposed on the baffle (10), a driving shaft (31) of the air sweeping blade driving motor (30) is drivablely connected with a rotating shaft (21) of the air sweeping blade (20), so as to drive the air sweeping blade (20) to rotate, wherein the air guiding mechanism further comprises a shaft sleeve (40), the driving shaft (31) and/or the rotating shaft (21) are rotatably provided in the shaft sleeve (40) in a penetration manner, and the baffle (10) is rotatably connected with the shaft sleeve (40), so that the baffle (10) and the air sweeping blade (20) are rotated relatively without interference by the shaft sleeve (40);
wherein the air sweeping blade driving motor (30) is provided with an end cover (32), and the shaft sleeve (40) is fixedly connected to or integrally formed with the end cover (32), so that the driving shaft (31) is rotatably provided in the shaft sleeve (40) in a penetration manner;
**characterized in that**:
the air sweeping blade driving motor (30) is mounted on a telescopic rod of a driving box (60).

2. The air guiding mechanism according to claim 1, wherein a positioning rod (50) is connected to the end cover (32), and the positioning rod (50) is connected with the telescopic rod of a driving box (60) to support the end cover (32) on the telescopic rod of a driving box (60).

3. The air guiding mechanism according to claim 2, wherein the positioning rod (50) extends along an extending direction of the telescopic rod of a driving box (60).

4. The air guiding mechanism according to claim 1, wherein the baffle (10) is provided with a hook (11), and the baffle (10) is rotatably mounted on the shaft sleeve (40) by the hook (11) in a hanging manner.

5. The air guiding mechanism according to claim 4, wherein an outer wall of the shaft sleeve (40) is provided with a limiting groove (41) around a circumferential direction of the shaft sleeve (40), and the hook (11) is rotatably provided in the limiting groove (41) in a hanging manner.

6. The air guiding mechanism according to claim 5, wherein the air sweeping blade driving motor (30) is provided with an end cover (32); wherein the shaft sleeve (40) comprises: a cylindrical body portion (42) and a flange portion (43), one end of the cylindrical body portion (42) being connected to an end face of the end cover (32), the flange portion (43) being provided at the other end of the cylindrical body portion (42), the limiting groove (41) being formed among the end face of the end cover (32), an outer circumferential wall of the cylindrical body portion (42) and the flange portion (43).

7. The air guiding mechanism according to claim 6, wherein the end face of the end cover (32) is provided with an annular flange, and the limiting groove (41) is surrounded by the annular flange, the outer circumferential wall of the cylindrical body portion (42) and the flange portion (43).

8. The air guiding mechanism according to claim 1, wherein the shaft sleeve (40) is provided on the driving shaft (31) in a sleeving manner, and an inner diameter of the shaft sleeve (40) is larger than an outer diameter of the driving shaft (31), so that the driving shaft (31) is in clearance fit with the shaft sleeve (40).

9. The air guiding mechanism according to claim 1, further comprising: an baffle driving motor (70); wherein one end of the baffle(10) is rotatably connected with the shaft sleeve (40), and the other end of the baffle (10) is connected with the baffle driving motor (70), so that the baffle driving motor (70) drives the baffle (10) to rotate.

10. An air conditioner, comprising an air guiding mechanism, wherein the air guiding mechanism is the air guiding mechanism according to any one of claims 1 to 9.

## Patentansprüche

1. Luftführungsmechanismus, umfassend ein Leitblech (10), ein Luftschwenkblatt (20) und einen Luftschwenkblattantriebsmotor (30), wobei das Luftschwenkblatt (20) drehbar auf dem Leitblech (10) angeordnet ist, eine Antriebswelle (31) des Luftschwenkblattantriebsmotors (30) mit einer Drehwelle (21) des Luftschwenkblatts (20) antreibbar verbunden ist, sodass das Luftschwenkblatt (20) angetrieben wird, um sich zu drehen, wobei der Luftführungsmechanismus weiter eine Wellenhülse (40) umfasst, die Antriebswelle (31) und/oder die Drehwelle (21) die Wellenhülse (40) durchlaufend drehbar bereitgestellt sind, und das Leitblech (10) drehbar mit der Wellenhülse (40) verbunden ist, sodass das Leitblech (10) und das Luftschwenkblatt (20) ohne Beeinträchtigung durch die Wellenhülse (40) relativ gedreht werden;
wobei der Luftschwenkblattantriebsmotor (30) mit einer Endabdeckung (32) versehen ist und die Wellenhülse (40) fest mit der Endabdeckung (32) verbunden oder einstückig mit ihr ausgebildet ist, sodass die Antriebswelle (31) in der Wellenhülse (40) durchlaufend drehbar bereitgestellt ist;
**dadurch gekennzeichnet, dass**:
der Luftschwenkblattantriebsmotor (30) auf einer Teleskopstange eines Antriebskastens (60) montiert ist.

2. Luftführungsmechanismus nach Anspruch 1, wobei eine Positionierstange (50) mit der Endabdeckung (32) verbunden ist und die Positionierstange (50) mit der Teleskopstange eines Antriebskastens (60) verbunden ist, um die Endabdeckung (32) auf der Teleskopstange eines Antriebskastens (60) abzustützen.

3. Luftführungsmechanismus nach Anspruch 2, wobei sich die Positionierstange (50) entlang einer Verlängerungsrichtung der Teleskopstange eines Antriebskastens (60) erstreckt.

4. Luftführungsmechanismus nach Anspruch 1, wobei das Leitblech (10) mit einem Haken (11) versehen ist und das Leitblech (10) durch den Haken (11) an der Wellenhülse (40) drehbar hängend montiert ist.

5. Luftführungsmechanismus nach Anspruch 4, wobei eine Außenwand der Wellenhülse (40) mit einer Begrenzungsnut (41) um eine Umfangsrichtung der Wellenhülse (40) versehen ist und der Haken (11) in der Begrenzungsnut (41) drehbar hängend bereitgestellt ist.

6. Luftführungsmechanismus nach Anspruch 5, wobei der Luftschwenkblattantriebsmotor (30) mit einer Endabdeckung (32) versehen ist; wobei die Wellenhülse (40) Folgendes umfasst: einen zylindrischen Körperabschnitt (42) und einen Flanschabschnitt (43), wobei ein Ende des zylindrischen Körperabschnitts (42) mit einer Stirnseite der Endabdeckung (32) verbunden ist, wobei der Flanschabschnitt (43) am anderen Ende des zylindrischen Körperabschnitts (42) bereitgestellt ist, wobei die Begrenzungsnut (41) zwischen der Stirnseite der Endabdeckung (32), einer Außenumfangswand des zylindrischen Körperabschnitts (42) und dem Flanschabschnitt (43) gebildet ist.

7. Luftführungsmechanismus nach Anspruch 6, wobei die Stirnseite der Endabdeckung (32) mit einem ringförmigen Flanschversehen ist und die Begrenzungsnut (41) von dem Ringflansch, der Außenumfangswand des zylindrischen Körperabschnitts (42) und dem Flanschabschnitt (43) umgeben ist.

8. Luftführungsmechanismus nach Anspruch 1, wobei die Wellenhülse (40) in Hülsenanordnung auf der Antriebswelle (31) bereitgestellt ist und ein Innendurchmesser der Wellenhülse (40) größer als ein Außendurchmesser der Antriebswelle (31) ist, sodass die Antriebswelle (31) Spielpassung zu der Wellenhülse (40) aufweist.

9. Luftführungsmechanismus nach Anspruch 1, weiter umfassend: einen Leitblechantriebsmotor (70); wobei ein Ende des Leitblechs (10) drehbar mit der Wellenhülse (40) verbunden ist und das andere Ende des Leitblechs (10) mit dem Leitblechantriebsmotor (70) verbunden ist, sodass der Leitblechantriebsmotor (70) das Leitblech (10) antreibt, sodass es sich dreht.

10. Klimaanlage, umfassend einen Luftführungsmechanismus, wobei der Luftführungsmechanismus der Luftführungsmechanismus nach einem der Ansprüche 1 bis 9 ist.

## Revendications

1. Mécanisme de guidage d'air comprenant un déflecteur (10), une lame de balayage d'air (20) et un moteur d'entraînement de lame de balayage d'air (30), dans lequel la lame de balayage d'air (20) est disposée, de manière rotative, sur le déflecteur (10), un arbre d'entraînement (31) du moteur d'entraînement de lame de balayage d'air (30) est raccordé, par entraînement, à un arbre rotatif (21) de la lame de balayage d'air (20), afin d'entraîner la lame de balayage d'air (20) à tourner, dans lequel le mécanisme de guidage d'air comprend en outre un manchon d'arbre (40), l'arbre d'entraînement (31) et/ou l'arbre rotatif (21) est (sont) prévu(s) dans le manchon d'arbre (40) par pénétration, et le déflecteur (10) est raccordé, de manière rotative, au manchon d'arbre (40), de sorte que le déflecteur (10) et la lame de balayage d'air (20) sont entraînés en rotation relativement sans interférence par le manchon d'arbre (40) ;
dans lequel le moteur d'entraînement de lame de balayage d'air (30) est prévu avec un couvercle d'extrémité (32) et le manchon d'arbre (40) est raccordé, de manière fixe, à ou formé, de manière solidaire, avec le couvercle d'extrémité (32), de sorte que l'arbre d'entraînement (31) est prévu, de manière rotative, dans le manchon d'arbre (40) par pénétration ;
**caractérisé en ce que** :
le moteur d'entraînement de lame de balayage d'air (30) est monté sur une tige télescopique d'une boîte d'entraînement (60).

2. Mécanisme de guidage d'air selon la revendication 1, dans lequel une tige de positionnement (50) est raccordée au couvercle d'extrémité (32) et la tige de positionnement (50) est raccordée à la tige télescopique d'une boîte d'entraînement (60) afin de supporter le couvercle d'extrémité (32) sur la tige télescopique d'une boîte d'entraînement (60).

3. Mécanisme de guidage d'air selon la revendication 2, dans lequel la tige de positionnement (50) s'étend le long d'une direction d'extension de la tige télescopique d'une boîte d'entraînement (60).

4. Mécanisme de guidage d'air selon la revendication 1, dans lequel le déflecteur (10) est prévu avec un crochet (11) et le déflecteur (10) est monté, de manière rotative, sur le manchon d'arbre (40) par le crochet (11) en suspension.

5. Mécanisme de guidage d'air selon la revendication 4, dans lequel une paroi externe du manchon d'arbre (40) est prévue avec une rainure de limitation (41) autour d'une direction circonférentielle du manchon d'arbre (40) et le crochet (11) est prévu, de manière rotative, dans la rainure de limitation (41) en suspension.

6. Mécanisme de guidage d'air selon la revendication 5, dans lequel le moteur d'entraînement de lame de balayage d'air (30) est prévu avec un couvercle d'extrémité (32) ; dans lequel le manchon d'arbre (40) comprend : une partie de corps cylindrique (42) et une partie de bride (43), une extrémité de la partie de corps cylindrique (42) étant raccordée à une face d'extrémité du couvercle d'extrémité (32), la partie de bride (43) étant prévue au niveau de l'autre extrémité de la partie de corps cylindrique (42), la rainure de limitation (41) étant formée parmi la face d'extrémité du couvercle d'extrémité (32), une paroi circonférentielle externe de la partie de corps cylindrique (42) et la partie de bride (43).

7. Mécanisme de guidage d'air selon la revendication 6, dans lequel la face d'extrémité du couvercle d'extrémité (32) est prévue avec une bride annulaire, et la rainure de limitation (41) est entourée par la bride annulaire, la paroi circonférentielle externe de la partie de corps cylindrique (42) et la partie de bride (43).

8. Mécanisme de guidage d'air selon la revendication 1, dans lequel le manchon d'arbre (40) est prévu sur l'arbre d'entraînement (31) par emmanchement, et un diamètre interne du manchon d'arbre (40) est supérieur à un diamètre externe de l'arbre d'entraînement (31), de sorte que l'arbre d'entraînement (31) est en ajustement avec jeu avec le manchon d'arbre (40).

9. Mécanisme de guidage d'air selon la revendication 1, comprenant en outre : un moteur d'entraînement de déflecteur (70) ; dans lequel une extrémité du déflecteur (10) est raccordée, de manière rotative, avec le manchon d'arbre (40) et l'autre extrémité du déflecteur (10) est raccordée avec le moteur d'entraînement de déflecteur (70), de sorte que le moteur d'entraînement de déflecteur (70) entraîne le déflecteur (10) à tourner.

10. Climatiseur comprenant un mécanisme de guidage d'air, dans lequel le mécanisme de guidage d'air est le mécanisme de guidage d'air selon l'une quelconque des revendications 1 à 9.
